# EUROPEAN PATENT APPLICATION

(11) **EP 1 564 190 A1**
(43) Date of publication of application: **17.08.2005**
(21) Application number: 04024035.0
(22) Date of filing: 08.10.2004
(51) Int. Cl.: C03B 37/016, C03C 1/00, C04B 35/634

(54) **Method for fabricating preform for holey fiber**

(30) Priority: 11.02.2004 KR 2004009044
(71) Applicant: Samsung Electronics Co., Ltd., Suwon-si, Gyeonggi-do (KR)
(72) Inventor: Oh, Jeong-Hyun, Suwon-city Kyungki-do (KR); Baik, Young-Min, Suwon-si Gyeonggi-do (KR); Kim, Jin-Han, Suwon-si Gyeonggi-do (KR)
(74) Representative: Lang, Johannes, Dipl.-Ing.

(57) **Abstract**

A method of fabricating a preform (1,41) used for producing a holey fiber having air holes therein is disclosed. The method includes the steps of preparing a tubular mold (31) having a plurality of pins (32) for forming a plurality of air holes aligned in a predetermined pattern, injecting silica slurry including a monomer and a dimer into the tubular mold and forming silica slurry into a gel, demolding the gel from the pins and the tubular mold, and drying and sintering the gel formed with air holes. The size and alignment of the air holes are easily adjusted, thereby achieving a large preform without contamination of the preform during the fabricating process.

## Description

### BACKGROUND OF THE INVENTION

### 1. Field of the Invention

The present invention relates to a method for fabricating a preform used to produce a holey fiber with air holes.

### 2. Description of the Related Art

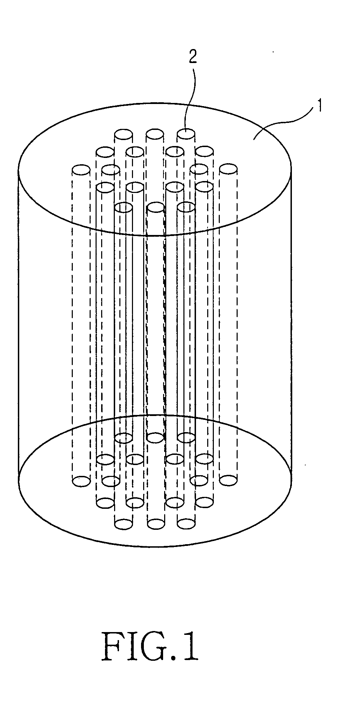

Generally, "holey fiber" refers to photonic crystal fiber, which is one type of optical fibers used in optical communications. Unlike a single mode optical fiber which uses a core including glass and germanium or phosphorus added to the glass, the holey fiber, as shown in FIG. 1, is made of substantially transparent material having a single solid-phase such as fused quartz glass 1. In addition, a plurality of air holes 2 are formed in the quartz glass 1 lengthwise running parallel to a fiber axis.

The holey fiber forms a photonic bandgap during a regular alignment utilizing a dielectric constant between an air layer and a quartz glass layer. Similar to an electronic bandgap in a semiconductor, such a photonic bandgap may form a photonic stop band against a predetermined wavelength or an optical wave traveling direction. That is, only light satisfying conditions of the photonic bandgap passes through the photonic bandgap. In other word, the traveling of light in the holey fiber depends on a photonic bandgap effect and an effective refractive index effect (referred to a thesis of T.A. Birks et al., Electronic Letters, Vol. 31(22) p. 1941, Oct. 1995, and a thesis of J.C. Knight et al., OFC, Vol.4 p.114 (Feb. 1999).

The holey fibers have important technical characteristics. For instance, a holey fiber can provide a single mode characteristic over a broad wavelength range and can transmit high optical power as it has a large mode area. In addition, the holey fiber exhibits a high phase-dispersion in a remote communication wavelength of 1.55µm. Furthermore, the holey fiber can be used for increasing/decreasing nonlinearity as well as adjusting polarization. As these various functional aspects of the holey fiber (photonic crystal fiber) have been reported, it is expected that the holey fiber may be utilized in various optical communication and optical industrial fields in the near future.

Conventionally, in order to fabricate the holey fiber, a preform is firstly fabricated by stacking and bundling a capillary glass tube and a glass rod in a desired shape, then an optical fiber is fabricated by drawing the preform.

However, according to the conventional holey fiber fabricating method, the assembling process is manually carried out by a worker, so the cleaning process or the washing process must be performed repeatedly in order to remove any contamination derived from the assembling process. Also, since the capillary glass tube and the glass rod are stacked and bundled with each other, an alignment of air holes is formed in a hexagonal pattern. As such, when the optical fiber is drawn from the preform, an outer tubular member of the optical fiber preform is melted faster than an inner tubular member of the optical fiber preform due to a difference of thermal conductivity therebetween, so the outer air holes may have a size significantly smaller than that of the inner air holes, or the outer air holes may be clogged. Further, the inner air holes having a relatively large size may be deformed into an oval shape. Due to such deformation of the air holes occurring when the optical fiber is drawn from the optical fiber preform, it is difficult to fabricate continuously the holey fibers during a mass production.

### SUMMARY OF THE INVENTION

Accordingly, the present invention has been made to solve the above-mentioned problems occurring in the prior art and provides additional advantages, by providing a method for fabricating a preform used to manufacture a holey fiber capable of preventing an optical fiber from being contaminated and facilitating a simple alignment of air holes.

Another aspect of the present invention is to provide a method for fabricating a preform of a holey fiber capable of solving problems derived from deformation and size-shrinkage of air holes occurring when an optical fiber is drawn from the preform in the prior art.

Yet another aspect of the present invention is to provide a method of fabricating a preform for a holey fiber, which includes the steps of: a) preparing a tubular mold having a plurality of pins for forming a plurality of air holes aligned in a predetermined pattern; b) injecting silica slurry including a monomer and a dimer into the tubular mold and forming silica slurry into a gel; c) demolding the gel from the pins and the tubular mold; and d) drying and sintering the gel formed with air holes.

According to another aspect of the present invention, optical transmission characteristics of the holey fiber fabricated from the preform are adjustable by adjusting a size and an alignment of the pins and a distance between the air holes.

According to yet another aspect of the present invention, step b) includes the substeps of: fabricating a premix solution by mixing a monomer and dimer into deionized water; forming a sol by inputting fuming silica and a dispersion agent into the premix solution; aging the sol by removing foam contained in the sol; injecting the sol into the mold and adding a polymerization initiator and a catalyst to the sol, thereby converting the sol into a gel; and aging the gel in order to reinforce strength of the gel.

### BRIEF DESCRIPTION OF THE DRAWINGS

The above features and advantages of the present invention will be more apparent from the following detailed description taken in conjunction with the accompanying drawings, in which:
FIG. 1 is a perspective view showing the structure of a preform used to produce a conventional holey fiber;
FIG. 2 is a block view showing the process of fabricating a holey fiber according to one embodiment of the present invention;
FIG. 3 illustrates the structure of a mold used in the present invention; and
FIG. 4 illustrates the process of fabricating a preform used to produce a holey fiber according to another embodiment of the present invention.

### DETAILED DESCRIPTION

Hereinafter, embodiments of the present invention will be described with reference to the accompanying drawings. For the purposes of clarity and simplicity, the same reference numerals are used to designate the same or similar components and a detailed description of known functions and configurations incorporated herein will be omitted as it may make the subject matter of the present invention unclear.

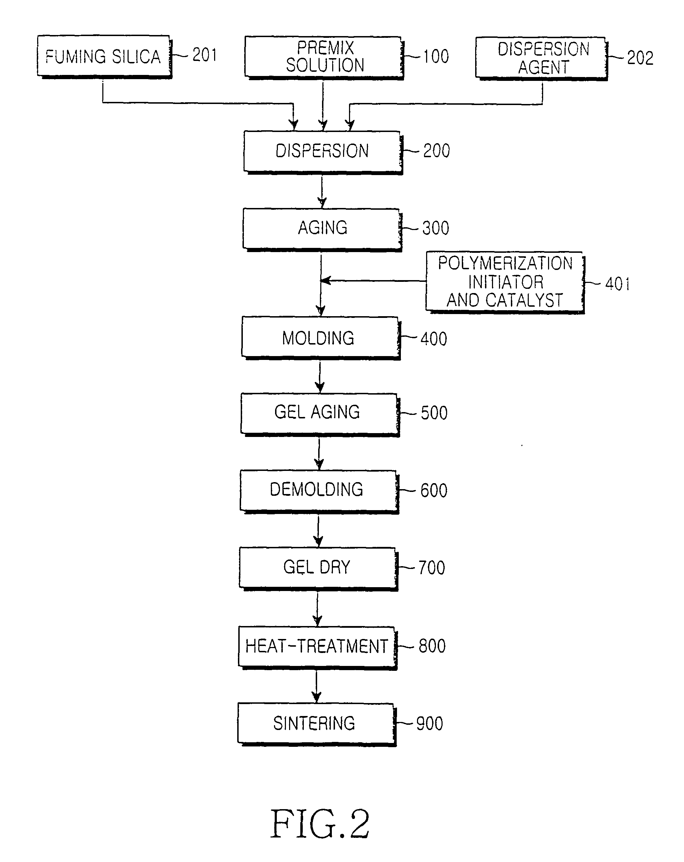

FIG. 2 is a block diagram showing the operation steps of fabricating a preform used to produce a holey fiber according to one embodiment of the present invention. As shown, a method of fabricating the preform includes a premix solution fabrication step 100, a dispersion step 200, an aging step 300, a molding step 400, a gel aging step 500, a demolding step 600, a gel dry step 700, a heat-treatment step 800, and a sintering step 900.

Premix solution fabrication step 100 involves fabricating of a premix solution by dissolving a monomer, such as acrylamide, methacrylamide or 1-Vinyl-2-pyrrolidinone, and a dimer, such as N,N'-methylenebissacrylamide, in distillation water.

Dispersion step 200 involves forming of slurry by injecting fuming silica 201 and a dispersion agent 202 into the premix solution fabricated in step 100 for performing the mixing/dispersing if the combined mixture. A mixing ratio of fuming silica 201 (for example, aerosil-OX50 available from DEGUSSA) is about 40 to 60 weight percent. The dispersion agent 202 includes tetramethylammonium hydroxide (hereinafter, simply referred to as TMAH) and used to adjust acidity (pH) of the mixture in a range of 11 to 13 so as to easily disperse silica.

Aging step 300 involves removing of air remaining in the dispersed solution by using a vacuum pump and stabilizing silica particles by aging a dispersed sol for a predetermined period of time (generally, less than 15 hours).

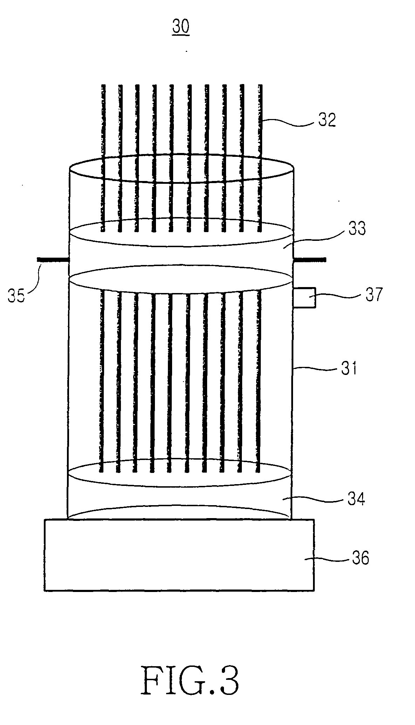

In molding step 400, the sol, which has been achieved through aging step 300, is injected into a mold having a predetermined shape (for example, a mold 30 shown in FIG. 3), and a polymerization initiator and a catalyst 401 are added to the sol in the mold so that the sol is converted into a gel through a polymerization process.

FIG. 3 is a view showing the structure of the mold 30 used in the present invention. The mold 30 includes a tubular vessel 31, a plurality of pins 32 for forming air holes, up and lower pin fixing members 33 and 34 for determining an alignment of the air holes, a fixing bolt 35 for fixing the upper pin fixing member 33 to the vessel 31, a lower cap 36, and a slurry injection port 37. The pins 32 for forming air holes are made from metallic materials, such as an SUS-rod, a rod including general steel coated with chrome, and a rod surface-coated with Teflon.

Referring back to FIG. 2, the polymerization initiator and the catalyst 401 is added in molding step 400 in order to polymerize the monomer and the dimer added to the premix solution. The polymerization initiator includes an ammonium persulfate water solution, and the catalyst 401 includes N,N,N',N'- tetramethylethylenediamine (hereinafter, simply referred to as TEMED).

Gel aging step 500 involves improving the strength of the gel by aging the gel, which has been passed through molding step 400, at the normal temperature.

In demolding step 600, a wet gel, which has been passed through gel aging step 500, is demolded from the mold 30. That is, the pins 32 for forming the air holes are removed through an upper portion or a lower portion of the mold 30, then the wet gel is demolded from the mold 30.

Dry step 700 involves forming of a dry gel by drying the wet gel demolded from the mold 30 using a constant temperature and humidity apparatus under the conditions of a temperature of about 20 to 50°C and RH 70 to 95% for one week.

In heat-treatment step 800, the dry gel is heat-treated in a temperature range of about 300 to 700C°, such that humidity and organic substances remaining in the gel are completely removed. Then, the heat-treatment process is again carried out in a temperature range of about 300 to 1200°C, while supplying chlorine gas, thereby removing an OH radical remaining in the gel.

In sintering step 900, the preform for a silica glass holey fiber having high purity without containing foam therein is fabricated by performing a heat-treatment process in the temperature range of about 1100 to 1600°C, while forming a vacuum atmosphere or supplying helium gas.

One exemplary embodiment of the present invention in producing a preform is explained hereinafter.

Firstly, a SUS-tube having an inner diameter of 124mm and a length of 1000mm, and SUS-pins for forming air holes having diameters of 4mm are prepared. Fixing members for aligning air holes and supporting the pins are made from acryl, acetal, or Teflon material. Air holes are aligned in seven rows by means of 168 pins. Prepared mold components are cleaned by means of alcohol before they are assembled.

A premix solution including 2.825g of deionized water, 108g of 1-vinyl-2-pyrrolidinone, and 12g of N,N'-methylethylenediamine is mixed with 375cc of a solution including 25 weight percent of TMAH, and 3000g of aerosil-OX 50 available from DEGUSSA is added thereto. Then, the mixture is dispersed in a high-performance mixer, thereby forming slurry.

Slurry is injected into a prepared mold so as to form a gel. The gel is solidified within one hour and the solidified gel is subject to an aging process for 5 hours. After performing the aging process, a center rod is removed through a lower portion of the mold and the gel is ejected from the SUS tube. Then, the gel is subject to a dry process for 7 days in the constant temperature and humidity apparatus having the temperature of about 30°C and humidity of about 70%.

After performing the dry process, a heat treatment process is carried out in order to remove organic substances remaining in the gel by raising the temperature up to 550°C. At this time, the temperature is raised by 50°C/hour for five hours. The process of removing remaining humidity and organic substances from the gel is continuously carried out in situ. For the purpose of glassification, the temperature is raised up to 1000°C by 100°C/hr and the temperature is maintained for 5 hours. At this time, an OH radical is removed by adjusting chlorine gas. Then, a sintering process is carried out in a He gas atmosphere while raising the temperature up to 1500°C by 100°C/hr, thereby fabricating a high-purity silica glass preform.

The glass preform has a diameter of 80mm and a length of 60mm, and each of the air holes has a diameter of 2.5mm and a distance between centers of adjacent air holes is about 4.1mm. In an alternate embodiment, the sintering process is carried out in the vacuum atmosphere at the temperature of 1500°C and a vacuum degree of 1Torr. Other process conditions are identical to those described above, thus the discussion of the same features is omitted herein to avoid redundancy.

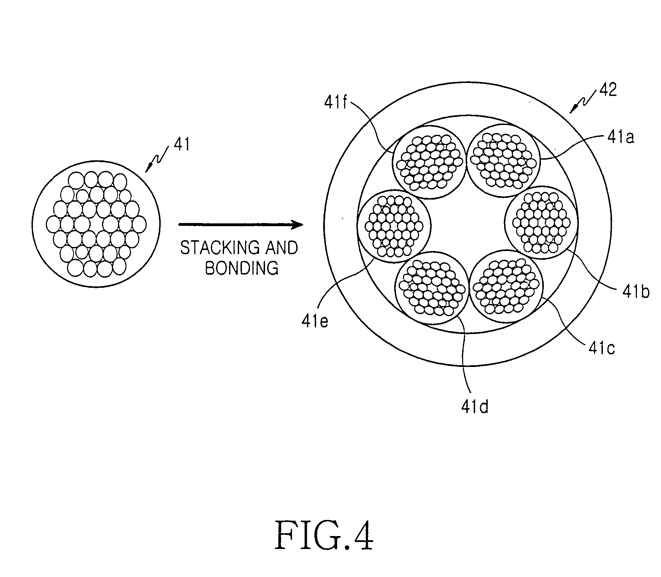

Note that the holey fiber preform fabricated through embodiment 1 or embodiment 2 is elongated so as to achieve a preform 41 having a small diameter as shown in FIG. 4. Then, preforms 41a to 41 f are stacked and bundled with each other so as to form a preform bundle, and the preform bundle is inserted into a large glass tube 42 such that the preform bundle is bonded to the large glass tube 42, thereby forming another preform having a different structure.

For example, preforms fabricated through embodiment 1 or embodiment 2 are elongated at the temperature of about 2000°C, such that the diameter (80mm) of the preforms can be reduced to 10mm. The cylindrical preforms having the diameter of 10mm are stacked in a hexagonal pattern and the stacked cylindrical preforms are inserted into the glass tube having an inner diameter of 22mm and an outer diameter of 40mm. The stacked cylindrical preforms are bonded to the glass tube.

As described above, according to the present invention, the holey fiber preform is fabricated using silica slurry including the monomer and the dimer so that the size and alignment of the air holes can be easily adjusted, thereby achieving various holey fiber preforms. Further, a large preform can be fabricated without contaminating the large preform during the fabricating process.

While the present invention has been shown and described with reference to certain preferred embodiments thereof, it will be understood by those skilled in the art that various changes in form and details may be made therein without departing from the spirit and scope of the invention as defined by the appended claims.

## Claims

1. A method for fabricating a preform used to produce a holey fiber, the method comprising the steps of:
a) preparing a tubular mold having a plurality of pins for forming a plurality of air holes aligned in a predetermined pattern;
b) injecting silica slurry including a monomer and a dimer into the tubular mold to form a gel;
c) demolding the gel from the pins and the tubular mold; and
d) drying and sintering the demolded gel formed with air holes.

2. The method as claimed in claim 1, further comprising the step of selectively changing a size and an alignment of the plurality of pins, and a distance between the plurality of air holes to adjust optical transmission characteristics of the holey fiber.

3. The method as claimed in claim 1, wherein, in step a), the pins for forming the air holes are aligned in a photonic lattice pattern.

4. The method as claimed in claim 1, wherein, in step a), the pins for forming the air holes are aligned irregularly.

5. The method as claimed in claim 1, wherein step b) includes the substeps of:
i) fabricating a premix solution by mixing a monomer and dimer into deionized water;
ii) forming a sol by inputting fuming silica and a dispersion agent into the premix solution;
iii) aging the sol by removing foam contained in the sol;
iv) injecting the sol into the mold and adding a polymerization initiator and a catalyst to the sol, thereby converting the sol into a gel; and
v) aging the gel in order to reinforce strength of the gel.

6. The method as claimed in claim 1, wherein step d) includes the substeps of:
i) drying the gel demolded from the mold, thereby forming a dry gel;
ii) heat-treating the dry gel in order to remove humidity and impurities contained in the dry gel; and
iii) sintering the dry gel so as to glassify the dry gel.

7. The method as claimed in claim 6, wherein the sintering process (iii) is carried out in a vacuum atmosphere.

8. The method as claimed in claim 5, wherein the monomer includes one selected from the group consisting of acrylamide, methacrylamide, and 1-Vinyl-2-pyrrolidinone.

9. The method as claimed in claim 5, wherein the dimer includes N,N'- methylenebissacrylamide.

10. The method as claimed in claim 5, wherein a mixing ratio for the fuming silica is about 40 to 60 weight percent.

11. The method as claimed in claim 5, wherein the dispersion agent adjusts acidity (pH) of a mixture in a range of 11 to 13.

12. The method as claimed in claim 5, wherein the polymerization initiator includes an ammonium persulfate water solution.

13. The method as claimed in claim 5, wherein the catalyst includes N,N,N',N'-tetramethylethylenediamine.

14. The method as claimed in claim 6, wherein the heat-treatment step is carried out in situ.

15. The method as claimed in claim 1, further comprising the step of elongating the preform to produce the holey fiber.

16. A holey fiber produced by elongating the preform manufactured by the steps recited in claim 1.
